# EUROPEAN PATENT SPECIFICATION

(11) **EP 4 461 603 B1**
(45) Date of publication and mention of the grant of the patent: **03.09.2025**
(21) Application number: 24174554.6
(22) Date of filing: 07.05.2024
(51) Int. Cl.: B60R 19/12, B60R 19/34, B60R 19/56

(54) **A HEAVY GOODS VEHICLE**
SCHWERLASTFAHRZEUG
VÉHICULE POUR MARCHANDISES LOURDES

(30) Priority: 09.05.2023 NL 2034787
(43) Date of publication of application: 13.11.2024
(73) Proprietor: DAF Trucks N.V., 5643 TW Eindhoven (NL)
(72) Inventor: JANSEN, Adrianus Jacobus Antonius, 5643 TW Eindhoven (NL)
(74) Representative: V.O.

(56) References cited:
- WO-A2-2012/087101
- DE-A1- 19 912 272
- US-B2- 8 287 036

## Description

The invention relates to a heavy goods vehicle according to the preamble of claim 1.

Such a vehicle is for example known from WO12087101A2. In this known vehicle a support for a truck bumper absorbs energy and provides protection against vehicle underruns in case of a collision. The support comprises a trapezoidal-shaped structure defined by a bar for securing same to the chassis, a bumper support bar, a front and a rear tension-compression bar joined together at their ends, wherein the front compression-tension bar is shorter in length than the rear compression-tension bar. Although the support is an effective crash protection assembly, it appears in practice that in particular in case of a low speed crash or in case of forces acting on the vehicle while driving through deep tracks and when the vehicle mid bottom comes in contact with the road some parts of the vehicle, such as for example headlamps, can still be damaged. There is thus still a need in the field to provide a crash protection assembly that can reduce the damage to vehicle parts in case of low speed crashes or in case of forces acting on the vehicle while driving through deep tracks and when the vehicle mid bottom comes in contact with the road.

According to the invention this need can be at least partly met by providing a heavy goods vehicle according to claim 1. By using such front crash absorption brackets having a front portion connected to the base body via two curved arms, the curved arms not only define the location where the deformation takes place e.g. in case of a crash at low speeds but also absorb the energy as a result of such a low speed crash. Due to the fact that one of the curved arms curves inwards with regard to a center of the heavy goods vehicle and the other one of the curved arms curves downwards damage to e.g. the headlamps or other front parts of the heavy goods vehicle can at least be reduced.

In an embodiment of a heavy goods vehicle according to the invention each front crash absorption bracket has a lower portion arranged in contact against a lower part of the front bumper, the lower portion being connected to the base body via two arms. In this manner deformation and/or damage of the lower part of the front bumper and any component arranged therein can at least be reduced

In a further embodiment of a heavy goods vehicle according to the invention the rear end of the base body of the front crash absorption bracket is supported against a front part of a respective bracket by means of an intermediate bracket. By using such intermediate brackets the front crash absorption brackets can be installed in a variety of heavy goods vehicles in a relatively easy manner.

The invention will be further explained with reference to the Figures, in which a non-limiting exemplary embodiment of a vehicle according to the invention is shown:
Fig. 1 schematically shows in perspective an embodiment of a crash protection assembly provided at the front of a heavy goods vehicle according to the invention;
Fig. 2 schematically shows in perspective a portion of the left part of the crash protection assembly shown in Figure 1; and
Fig. 3 schematically shows a side view of Figure 2; and
Figs. 4 and 5 schematically show in perspective the left and right front crash absorption bracket, respectively, of the embodiments shown in Figures 1-3.

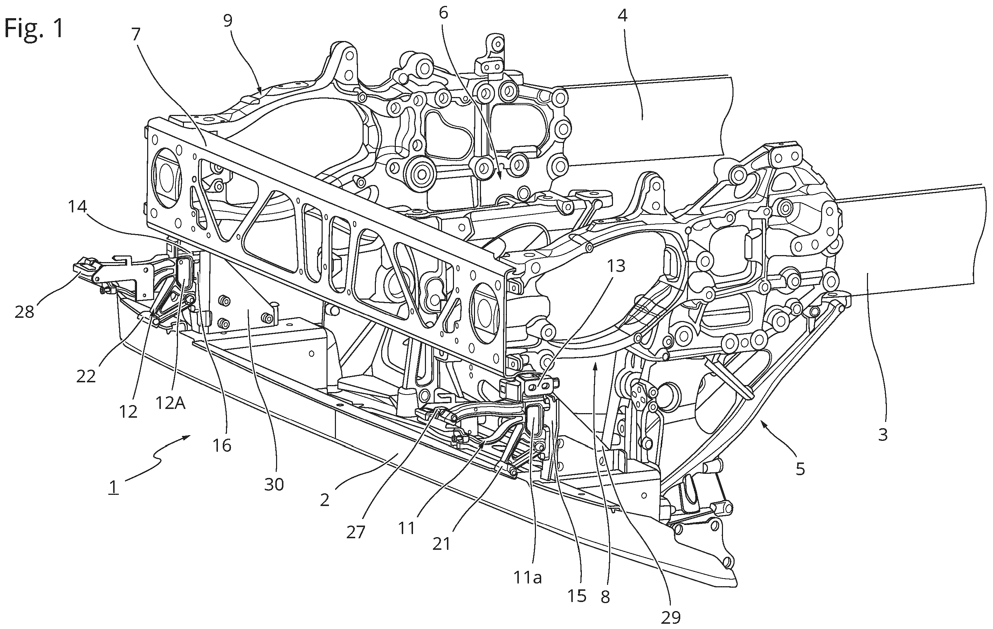

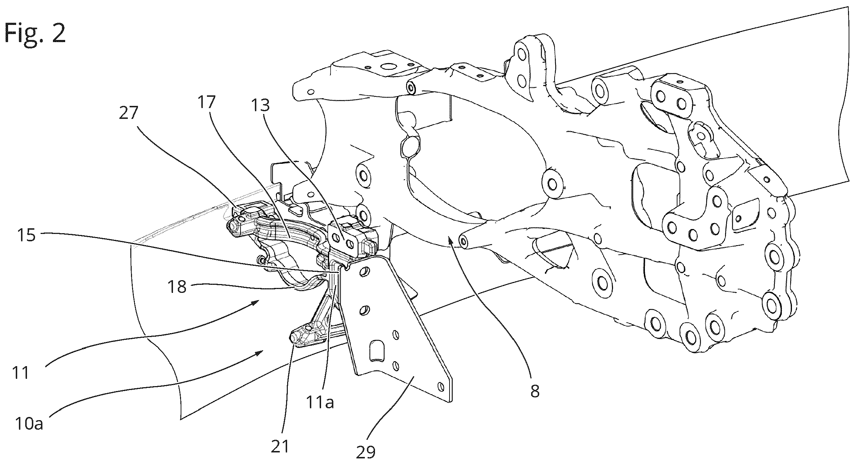

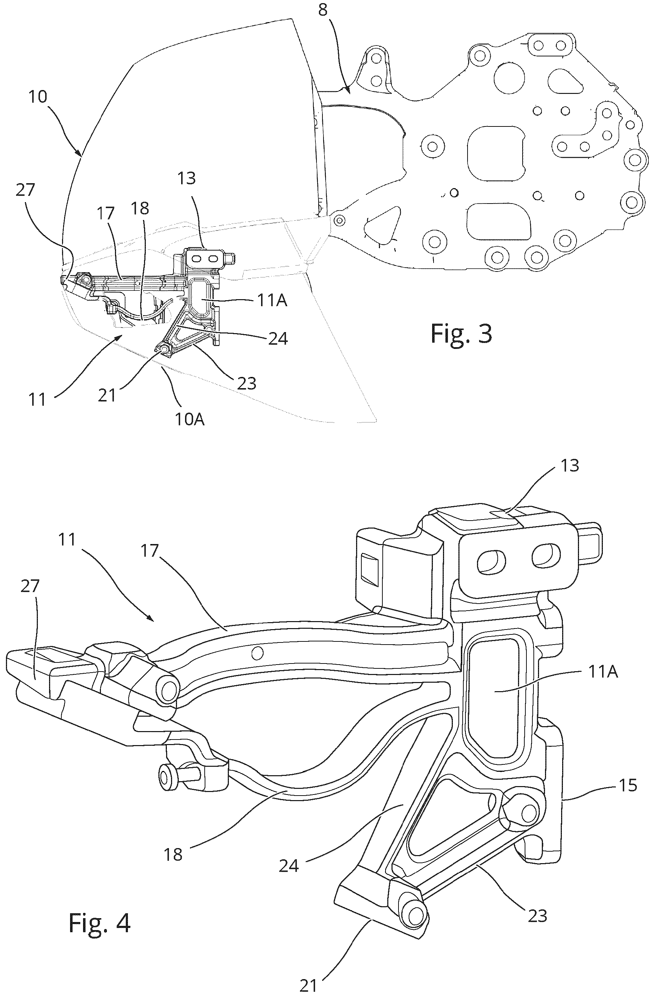

In Fig. 1 the relevant front part of a heavy goods vehicle, depicting the a crash protection assembly 1 provided at the front of the vehicle, when seen in a normal forward direction of movement of the vehicle, and the two parallel frame beams 3; 4 of the vehicle chassis which extend in the longitudinal direction of the vehicle, is schematically shown in perspective. The crash protection assembly 1 comprises a lower cross beam 2 extending transverse to the longitudinal direction of the vehicle and the lower cross beam 2 extends horizontally. The lower cross beam 2 is connected to the two parallel frame beams 3; 4 via brackets 5; 6 such that the lower cross beam 2 is arranged in front and below the two parallel frame beams 3; 4 so that the lower cross beam 2 provides front underrun protection. An upper cross beam 7 is arranged in front of and is connected to the two parallel frame beams 3; 4 via support elements 8; 9 and the crash protection assembly 1 further comprises a front bumper 10 (see Figure 2 and 3). The front bumper 10 is not shown in Figure 1 to more clearly show the components of the crash protection assembly 1.

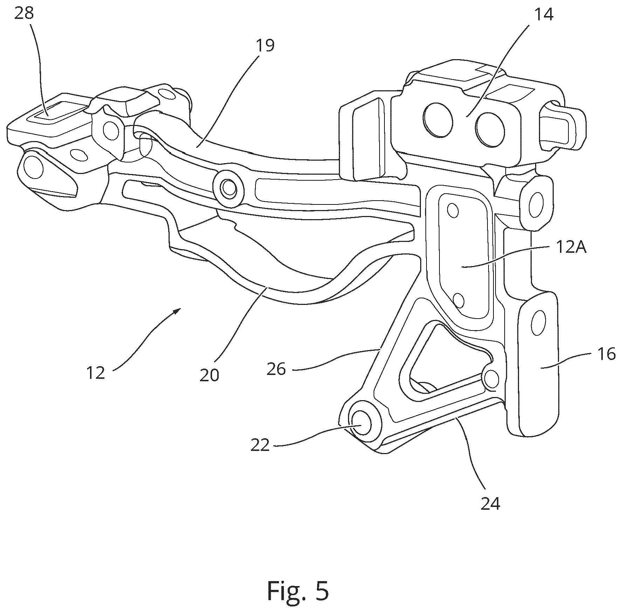

According to the invention the crash protection assembly 1 comprises two front crash absorption brackets 11; 12, a left front crash absorption bracket 11 (more detailed shown in Figures 2-4) and a right front crash absorption bracket 12 (more detailed shown in Figure 5). Please note that the expression left and right have the normal meaning as seen from the driver driving the heavy goods vehicle in the normal driving direction thereof. In addition, the expressions above and below are defined in their usual manner with regard to a vertical direction on the road on which the heavy goods vehicle is positioned.

As more detailed shown in Figures 2 to 5 each front crash absorption bracket 11; 12 has a base body 11A; 12A with an upper end 13; 14 and a rear end 15; 16. The upper end 13; 14 is connected to a lower end of a respective support element 8; 9 and the rear end 15; 16 is arranged below the upper end 13; 14. The rear end 15; 16 is further supported against a front part of a respective bracket 5; 6 by means of an intermediate bracket 29; 30 mounted on the lower cross beam 2, the dimensions of which preferably are adapted to the dimensions of the relevant chassis parts of the heavy goods vehicle.

Each front crash absorption bracket 11; 12 has a front portion 27; 28 arranged in contact against the front bumper 10. The front portions 27; 28 are connected to the base body 11A; 12A via two curved arms 17, 18; 19, 20. One of the curved arms 17; 19 curves inwards with regard to a center of the heavy goods vehicle and the other one of the curved arms 18; 20 curves downwards. The curved arms 17, 18; 19, 20 not only define the location where the deformation takes place e.g. in case of a crash at low speeds but also absorb the energy as a result of such a low speed crash. Due to the fact that one of the curved arms 17; 19 curves inwards with regard to a center of the heavy goods vehicle and the other one of the curved arms 18; 20 curves downwards damage to e.g. the headlamps or other front parts of the heavy goods vehicle can at least be reduced.

In the shown embodiment each front crash absorption bracket 11; 12 has a lower portion 21; 22 arranged in contact against a lower part 10A of the front bumper 10. The lower portion 21; 22 is connected to the base body 11A; 12A via two arms 23, 24; 25, 26 which provide an additional front underrun protection in addition to the lower cross beam, which latter has been left out in the Figures 2 and 3 for clarity reasons.

## Claims

1. A heavy goods vehicle comprising a crash protection assembly (1) provided at the front of the vehicle when seen in a normal forward direction of movement of the vehicle, said crash protection assembly (1) comprising a lower cross beam (2) extending transverse to the longitudinal direction of the vehicle and extending horizontally, said lower cross beam (2) being connected to two parallel frame beams (3; 4) of a vehicle chassis via brackets (5; 6) such that the lower cross beam (2) is arranged in front and below the two parallel frame beams (3; 4), said parallel frame beams (3; 4) of the vehicle extending in the longitudinal direction, said crash protection assembly (1) further comprising an upper cross beam (7) arranged in front of and connected to the two parallel frame beams (3; 4) via support elements (8; 9), and said crash protection assembly (1) comprising a front bumper (10), **characterized in that** the crash protection assembly (1) comprises two front crash absorption brackets (11; 12), each front crash absorption bracket (11; 12) having a base body (11A; 12A) having an upper end (13; 14) connected to a lower end of a respective support element (8; 9) and a rear end (15; 16) arranged below the upper end (13; 14) and being supported against a front part of a respective bracket (5; 6); each front crash absorption bracket (11; 12) having a front portion (27; 28) arranged in contact against the front bumper (10), the front portion (27; 28) being connected to the base body (11A; 12A) via two curved arms (17, 18; 19, 20), one of the curved arms (17; 19) curving inwards with regard to a center of the heavy goods vehicle, the other one of the curved arms (18; 20) curving downwards.

2. A heavy goods vehicle according to claim 1, wherein each front crash absorption bracket (11; 12) having a lower portion (21; 22) arranged in contact against a lower part (10A) of the front bumper (10), the lower portion (21; 22) being connected to the base body (11A; 12A) via two arms (23, 24; 25, 26).

3. A heavy goods vehicle according to claim 1 or 2, wherein the rear end (15; 16) of the base body (11A; 12A) of the front crash absorption bracket (11; 12) is supported against a front part of a respective bracket (5; 6) by means of an intermediate bracket (29; 30) mounted on the lower cross beam (2).

## Patentansprüche

1. Schwerlastfahrzeug, umfassend eine Aufprallschutzanordnung (1), bereitgestellt, bei Betrachtung in einer normalen Vorwärtsbewegungsrichtung des Fahrzeugs, an der Front des Fahrzeugs, wobei die Aufprallschutzanordnung (1) einen unteren Querträger (2) umfasst, der sich quer zur Längsrichtung des Fahrzeugs erstreckt und sich horizontal erstreckt, wobei der untere Querträger (2) über Halterungen (5; 6) so mit zwei parallelen Rahmenträgern (3; 4) eines Fahrzeugchassis verbunden ist, dass der untere Querträger (2) vor und unter den zwei parallelen Rahmenträgern (3; 4) angeordnet ist, wobei sich die parallelen Rahmenträger (3; 4) des Fahrzeugs in Längsrichtung erstrecken, wobei die Aufprallschutzanordnung (1) ferner einen oberen Querträger (7) umfasst, angeordnet vor den beiden parallelen Rahmenträgern (3; 4) und über Stützelemente (8; 9) mit ihnen verbunden, und die Aufprallschutzanordnung (1) einen vorderen Stoßfänger (10) umfasst, **dadurch gekennzeichnet, dass** die Aufprallschutzanordnung (1) zwei vordere Aufprallabsorptionshalterungen (11; 12) umfasst, wobei jede vordere Aufprallabsorptionshalterung (11; 12) einen Basiskörper (11A; 12A) aufweist, aufweisend ein oberes Ende (13; 14), das mit einem unteren Ende eines jeweiligen Stützelements (8; 9) verbunden ist, und ein hinteres Ende (15; 16), das unterhalb des oberen Endes (13; 14) angeordnet ist und gegen einen vorderen Teil einer jeweiligen Halterung (5; 6) abgestützt ist; wobei jede vordere Aufprallabsorptionshalterung (11; 12) einen im Kontakt mit dem vorderen Stoßfänger (10) angeordneten vorderen Abschnitt (27; 28) umfasst, wobei der vordere Abschnitt (27; 28) über zwei gekrümmte Arme (17, 18; 19, 20) mit dem Basiskörper (11A; 12A) verbunden ist, wobei einer der gekrümmten Arme (17; 19) in Bezug auf eine Mitte des Schwerlastfahrzeugs nach innen gekrümmt ist und der andere der gekrümmten Arme (18; 20) nach unten gekrümmt ist.

2. Schwerlastfahrzeug nach Anspruch 1, wobei jede vordere Aufprallabsorptionshalterung (11; 12) einen unteren Abschnitt (21; 22) aufweist, der im Kontakt mit einem unteren Teil (10A) des vorderen Stoßfängers (10) angeordnet ist, wobei der untere Abschnitt (21; 22) über zwei Arme (23, 24; 25, 26) mit dem Basiskörper (11A; 12A) verbunden ist.

3. Schwerlastfahrzeug nach Anspruch 1 oder 2, wobei das hintere Ende (15; 16) des Basiskörpers (11A; 12A) der vorderen Aufprallabsorptionshalterung (11; 12) mittels einer am unteren Querträger (2) montierten Zwischenhalterung (29; 30) an einem vorderen Teil einer jeweiligen Halterung (5; 6) abgestützt ist.

## Revendications

1. Véhicule pour marchandises lourdes comprenant un ensemble de protection anti-collision (1) prévu à l'avant du véhicule lorsqu'il est vu dans une direction de déplacement vers l'avant normale du véhicule, ledit ensemble de protection anti-collision (1) comprenant une traverse inférieure (2) s'étendant transversalement à la direction longitudinale du véhicule et s'étendant horizontalement, ladite traverse inférieure (2) étant reliée à deux poutres de cadre parallèles (3 ; 4) d'un châssis de véhicule via des étriers (5 ; 6) de sorte que la traverse inférieure (2) est agencée à l'avant et au-dessous des deux poutres de cadre parallèles (3 ; 4), lesdites poutres de cadre parallèles (3 ; 4) du véhicule s'étendant dans la direction longitudinale, ledit ensemble de protection anti-collision (1) comprenant en outre une traverse supérieure (7) agencée en avant de et reliée aux deux poutres de cadre parallèles (3 ; 4) via des éléments de support (8 ; 9), et ledit ensemble de protection anti-collision (1) comprenant un pare-chocs avant (10), **caractérisé en ce que** l'ensemble de protection anti-collision (1) comprend deux étriers d'absorption de collision avant (11 ; 12), chaque étrier d'absorption de collision avant (11 ; 12) présentant un corps de base (11A ; 12A) présentant une extrémité supérieure (13 ; 14) reliée à une extrémité inférieure d'un élément de support respectif (8 ; 9) et une extrémité arrière (15 ; 16) agencée en dessous de l'extrémité supérieure (13 ; 14) et étant supportée contre une partie avant d'un étrier respectif (5 ; 6) ; chaque étrier d'absorption de collision avant (11 ; 12) présentant une partie avant (27 ; 28) agencée en contact contre le pare-chocs avant (10), la partie avant (27 ; 28) étant reliée au corps de base (11A ; 12A) via deux bras incurvés (17, 18 ; 19, 20), l'un des bras incurvés (17 ; 19) s'incurvant vers l'intérieur par rapport à un centre du véhicule pour marchandises lourdes, l'autre des bras incurvés (18 ; 20) s'incurvant vers le bas.

2. Véhicule pour marchandises lourdes selon la revendication 1, dans lequel chaque étrier d'absorption de collision avant (11 ; 12) présente une partie inférieure (21 ; 22) agencée en contact contre une partie inférieure (10A) du pare-chocs avant (10), la partie inférieure (21 ; 22) étant reliée au corps de base (11A ; 12A) via deux bras (23, 24 ; 25, 26).

3. Véhicule pour marchandises lourdes selon la revendication 1 ou 2, dans lequel l'extrémité arrière (15 ; 16) du corps de base (11A ; 12A) de l'étrier d'absorption de collision avant (11 ; 12) est supportée contre une partie avant d'un étrier respectif (5 ; 6) par l'intermédiaire d'un étrier intermédiaire (29 ; 30) monté sur la traverse inférieure (2).
